# EUROPÄISCHE PATENTANMELDUNG

(11) **EP 2 835 208 A1**
(43) Veröffentlichungstag der Anmeldung: **11.02.2015**
(21) Anmeldenummer: 14185059.4
(22) Anmeldetag: 22.05.2012
(51) Int. Cl.: B23K 11/04

(54) **Abbrennstumpfschweißmaschine mit einem einen Kurvenkörper aufweisenden Kurvengetriebe**

(30) Priorität: 01.07.2011 DE 202011050606 U
(62) Teilanmeldung aus: 12168782.6
(71) Anmelder: Ideal-Werk C. & E. Jungeblodt GmbH & Co.KG, 59557 Lippstadt (DE)
(72) Erfinder: Jungeblodt, Max Clemens, 59555 Lippstadt (DE)
(74) Vertreter: Graefe, Jörg

(57) **Zusammenfassung**

Die Erfindung betrifft eine Abrennstumpfschweißmaschine mit einem Antrieb (9, 10), der einen Servomotor (9) umfasst, mit einem Kurvengetriebe (7, 8), das mit einem Antrieb gekoppelt ist, mit einem ersten Haltemittel (1) zum Halten eines ersten Fügepartners, das mit einem Abtaster (7) des Kurvengetriebes (7, 8) verbunden ist, und mit einem zweiten Haltemittel (2) zum Halten eines zweiten Fügepartners, wobei das Kurvengetriebe (7, 8) einen Kurvenkörper, insbesondere eine Kurvenscheibe (8), aufweist und dass die Kurve des Kurvenkörpers (8) einen Absatz oder einen ersten Abschnitt mit einer unendlichen oder nahezu unendlichen Steigung aufweist.

## Beschreibung

Die vorliegende Erfindung betrifft eine Abbrennstumpfschweißmaschine mit einem Antrieb, der einen Servomotor umfasst, mit einem Kurvengetriebe, das mit dem Antrieb gekoppelt ist, mit einem ersten Haltemittel zum Halten eines ersten Fügepartners, das mit einem Abtaster des Kurvengetriebes verbunden ist, und mit einem zweiten Haltemittel zum Halten eines zweiten Fügepartners.

Eine Abbrennstumpfschweißmaschine dieser Art wird unter anderem von der IDEAL-Werk C.& E. Jungeblodt GmbH & Co. KG, Lippstadt, Deutschland, unter der Bezeichnung BAS und unter anderen Bezeichnungen seit Jahrzehnten hergestellt und vertrieben.

Eine Abbrennstumpfschweißmaschine ähnlicher Art ist zum Beispiel auch in der Offenlegungsschrift DE 22 33 647 beschrieben.

Bei dieser Art von Abbrennstumpfschweißmaschinen wird eine Kurvenscheibe des Kurvengetriebes von einem Elektromotor mit einer gleichbleibenden Geschwindigkeit angetrieben. In der Kurve der Kurvenscheibe ist die Bewegung des ersten Haltemittels programmiert. Die Kurve hat verschiedene Abschnitte, die jeweils einem Verfahrensschritt des Abbrennstumpfschweißvorgangs zugeordnet sind. Bei einer Kurvenscheibe für eine Abbrennstumpfschweißmaschine der eingangs genannten Art können beispielsweise bis zu sieben Abschnitte unterschieden werden, die sich in der Steigung der Kurve pro Winkelgrad unterscheiden.

Eine derartige Abbrennstumpfschweißmaschine kann nach einem Schweißen der Fügepartner dazu genutzt werden, die Schweißung zu Glühen, um Spannungen zu beseitigen. Dazu wird das Werkstück mit einem größeren Abstand der Haltemittel neu eingespannt. Das erste Haltemittel wird vom Antrieb entkoppelt, so dass das erste Haltemittel frei bewegbar ist, wodurch Verwerfungen vermieden werden, die entstehen könnten, wenn das Werkstück bei festem Abstand der Haltemittel eingespannt ist.

Soll mit einer solchen Abbrennstumpfschweißmaschine ein Abbrennstumpfschweißvorgang mit einem anderen Programm durchgeführt werden, muss in der Regel die Kurvenscheibe der Abbrennstumpfschweißmaschine ausgetauscht werden. Da sich die Abbrennstumpfschweißvorgänge von Produkt zu Produkt unterscheiden können, ist eine Vielzahl von Kurvenscheiben notwendig, die die Programme zur Durchführung der Schweißvorgänge codieren. Das ist umständlich und aufwändig.

In der Vergangenheit wurden daher Abbrennstumpfschweißmaschinen entwickelt, die eine größere Flexibilität haben. Eine solche Maschine ist in einer Patentanmeldung aus den USA beschrieben, die unter der Nummer US 2004/0188392 A1 veröffentlicht wurde. Die dort beschriebene Maschine weist eine Spindel auf, die von einem Servomotor angetrieben ist. Die Spindel bewegt das erste Haltemittel gegenüber dem zweiten Haltemittel, um die beiden Fügepartner anzunähern, von einander zu entfernen und gegeneinander zu schlagen, wie es bei Abbrennstumpfschweißvorgängen üblich ist.

Eine programmierbare Steuerung ermöglicht es, eine Vielzahl von verschiedenen Schweißvorgängen durchzuführen, ohne dass es dazu notwendig wäre Komponenten der Maschine auszutauschen.

Eine Abbrennstumpfschweißmaschine mit einem Servomotor und einer Spindel hat gegenüber einer Maschine mit einer Kurvenscheibe einen Nachteil, der darin liegt, dass der Stauchschlag, mit der die miteinander zu schweißenden Flächen der Fügepartner zusammengeschlagen werden, verglichen mit einer Maschine mit einer Kurvenscheibe nur langsam erfolgen kann. Gewünscht ist es aber, die Fügepartner mit möglichst hoher Geschwindigkeit zusammen zu bringen, damit die Materialien der Fügepartner an den zu schweißenden Flächen einander gut durchdringen können und so eine belastbare und qualitativ hochwertige Schweißung entsteht. Der Vortrieb des einen Fügepartners gegen den anderen erfolgt dabei vorteilhaft nicht linear.

Auch ist eine Entkopplung des ersten Haltemittels von dem Antrieb, wie es für ein Glühen des Werkstücks sinnvoll ist, nicht ohne weiteres möglich.

Ein schneller Stauchschlag kann nur dann erreicht werden, wenn man die Spindel und die in die Spindel eingreifende Mutter außer Eingriff bringt, so dass das bewegliche, mit der Mutter gekoppelte Haltemittel für einen der Fügepartner unabhängig von der Bewegung des Servomotors angetrieben und für den Stauchschlag bewegt werden kann. Wenn man die Mutter und die Spindel außer Eingriff bringen kann, ist auch ein freies Bewegen des Haltemittels beim Glühen möglich.

Die Konstruktion für eine aus der Spindel auskuppelbare Mutter ist sehr aufwändig und teuer.

Eine Abbrennstumpfschweißmaschine der eingangs genannten Art ist aus der JP 9 024477 A bekannt. Bei dieser Abbrennstumpfschweißmaschine ist ein Servomotor mit einem Kurvengetriebe gekoppelt, der einen translatorisch bewegbaren Kurvenkörper aufweist. Der Kurvenkörper des Kurvengetriebes umfasst eine abschnittsweise gekrümmt ausgebildete Außenoberfläche, die mit einem Abtaster zusammenwirkt, der seinerseits mit einem Haltemittel für einen ersten Fügepartner verbunden ist.

Vor dem Hintergrund der Nachteile von Abbrennstumpfschweißmaschinen mit einer Spindel war es das Anliegen, eine Abbrennstumpfschweißmaschine vorzuschlagen, die einerseits einfach und möglichst mit der Hilfe von Software programmierbar ist, mit der sich andererseits ein Stauchschlag mit der gewünschten Intensität durchführen lässt und die ein freies Bewegen des beweglichen Haltemittels beim Glühen ermöglicht.

Die Lösung dieser Aufgabe liefert eine Abbrennstumpfschweißmaschine der eingangs genannten Art mit den Merkmalen des kennzeichnenden Teils des Anspruchs 1. Eine alternative Lösung dieser Aufgabe ist in Anspruch 2 angegeben.

Wie aus der JP 9 024477 A an sich bekannt, weisen die erfindungsgemäßen Abbrennstumpfschweißmaschinen nach Anspruch 1 und Anspruch 2 einen Antrieb auf, der einen Servomotor umfasst, mit dem ein Kurvenkörper des Kurvengetriebes angetrieben wird.

Mit der Verwendung eines Servomotors anstelle eines während des Schweißvorgangs mit stets gleicher Geschwindigkeit drehenden Motors ist es möglich, die Bewegung des Kurvenkörpers zu beeinflussen. Der Kurvenkörper kann sich dadurch während des Schweißvorgangs schneller oder langsamer drehen.

Der Ablauf des Schweißvorgangs wird dadurch sowohl durch die vom Servomotor getriebene Bewegung des Kurvenköpers als auch durch die Kurve an dem Kurvenkörper vorgegeben. Die Programmierung der Maschine kann dadurch zum einen durch ein Ansteuern des Servomotors erfolgen. Zum anderen ist die Maschine zum Teil durch die Kurve des Kurvenkörpers vorgegeben.

So kann bei einer erfindungsgemäßen Abbrennstumpfschweißmaschine beispielsweise der Stauchschlag in dem Kurvenkörper programmiert sein. Dieses ist nach Anspruch 1 erfindungsgemäß dadurch möglich, dass in der Kurve ein Absatz vorgesehen ist, der zu einem Vorschnellen des Abtasters und des mit dem Abtaster verbundenen ersten Haltmittels führt. Dieses Vorschnellen des Abtasters und in Folge dessen auch des ersten Haltemittels kann erfindungsgemäß auch durch einen ersten Abschnitt der Kurve bewirkt werden, der eine unendliche, eine nahezu unendliche oder im Vergleich zu anderen Abschnitten der Kurve um eine deutlich vielfach größere Steigung hat.

Die erfindungsgemäße Maschine nach Anspruch 2 weist ein Steuer- und/oder Regelmittel auf, mit welchem eine Drehung des Servomotors und des damit gekoppelten Kurvenkörpers gesteuert und/oder geregelt werden kann. Erfindungsgemäß ist das Steuer- und/oder Regelmittel programmierbar. Alternativ oder zusätzlich kann zwischen Programmen des Steuer- und/oder Regelmittels ausgewählt werden. Mit den Programmen kann eine Sollbewegung des Kurvenkörpers vorgegeben werden, womit im Zusammenspiel mit der Kurve des Kurvenkörpers auch die Bewegung des ersten Haltemittels vorgegeben wird.

Abseits des ersten Abschnitts oder des Absatzes kann die Kurve weitere Abschnitte aufweisen. Auch diese weiteren Abschnitte können eine Programmierung der erfindungsgemäßen Maschine enthalten.

Vorteilhaft weist die erfindungsgemäße Maschine einen Kurvenkörper mit einer Kurve mit wenigstens einem zweiten Abschnitt mit einer gleichbleibenden positiven Steigung auf. Ebenso kann die Kurve des Kurvenköpers, in einem dritten Abschnitt eine gleichbleibende negative Steigung aufweisen.

Durch den Absatz und den zweiten und den dritten Abschnitt der Kurve bzw. durch die drei Abschnitte der Kurve können bei jedem Schweißvorgang vorhandene Bewegungen des ersten Haltemittels programmiert sein. So weisen viele bekannte Abbrennstumpfschweißvorgänge folgende Bewegungen des ersten Haltemittels auf: 1. Auseinanderfahren der Haltemittel, 2. langsames Annähren der Haltemittel, 3. Vorschnellen zum Stauchschlag.

Die meisten Abbrennstumpfschweißvorgänge unterscheiden sich lediglich dadurch, zu welchem Zeitpunkt die Haltemittel welche Position zueinander haben und zu welchem Zeitpunkt die Haltemittel welche Geschwindigkeit haben. Beides kann dadurch eingestellt werden, wie die Kurve von dem Abtaster abgetastet wird bzw. wie der Kurvenköper zur Steuerung der Bewegung des Abtasters bewegt wird.

Die Bewegung des Kurvenköpers wird durch den Servomotor bewirkt, weshalb durch eine Variation der durch den Servomotor verursachten Bewegung des Kurvenkörpers die Bewegung des Abtasters zusätzlich zu den Vorgaben durch die Kurve beeinflusst wird. Mit der Kurve des Kurvenkörpers können auf einfache Art und Weise grundlegende Bewegungsabläufe programmiert werden, während eine genauere Vorgabe der Bewegung durch eine Ansteuerung des Servomotors erreicht werden kann.

Bei einer erfindungsgemäßen Maschine können der erste Abschnitt, der zweite Abschnitt und der dritte Abschnitt oder der Absatz der Kurve des Kurvenkörpers mittelbar oder unmittelbar hintereinander liegen.

Das wenigstens eine Programm des Steuer- und/oder Regelmittels kann zum Beispiel eine Sollbewegung des Kurvenkörpers vorgeben, bei der der Kurvenkörper während eines Programmablaufs beschleunigt und/oder abgebremst wird.

Eine erfindungsgemäße Maschine kann wenigstens eine Feder und/oder wenigstens einen Linearantrieb aufweisen, die bzw. der mit dem ersten Haltemittel gekoppelt ist. Mittels der Feder oder dem Linearantrieb wird das erste Haltemittel mit einer Kraft so beaufschlagt, dass der Abtaster, der mit dem ersten Haltemittel verbunden ist, an der Kurve des Kurvenkörpers anliegt. Ferner kann mit der gleichen oder einer weiteren Feder bzw. mit dem gleichen oder einem weiteren Linearantrieb die notwendige Kraft bereitgestellt werden, um den Stauchschlag durchzuführen, wenn der erste Abschnitt oder der Absatz der Kurve erreicht wird.

Bei der Feder kann es sich um eine gewundene Torsionsfeder handeln. Der Linearantrieb kann ein Pneumatikantrieb oder ein Hydraulikantrieb sein.

Sind für den Kontakt zwischen dem Abtaster und der Kurvenscheibe und für den Stauchschlag verschiedene Antriebe vorgesehen, können diese Kräfte in die gleiche Richtung oder in entgegengesetzte Richtungen bereitstellen. Die Antriebe können gegeneinander verriegelt sein, so dass sie nicht gleichzeitig eine Kraft bereitstellen und der eine Antrieb ausgeschaltet ist wenn der andere eingeschaltet ist.

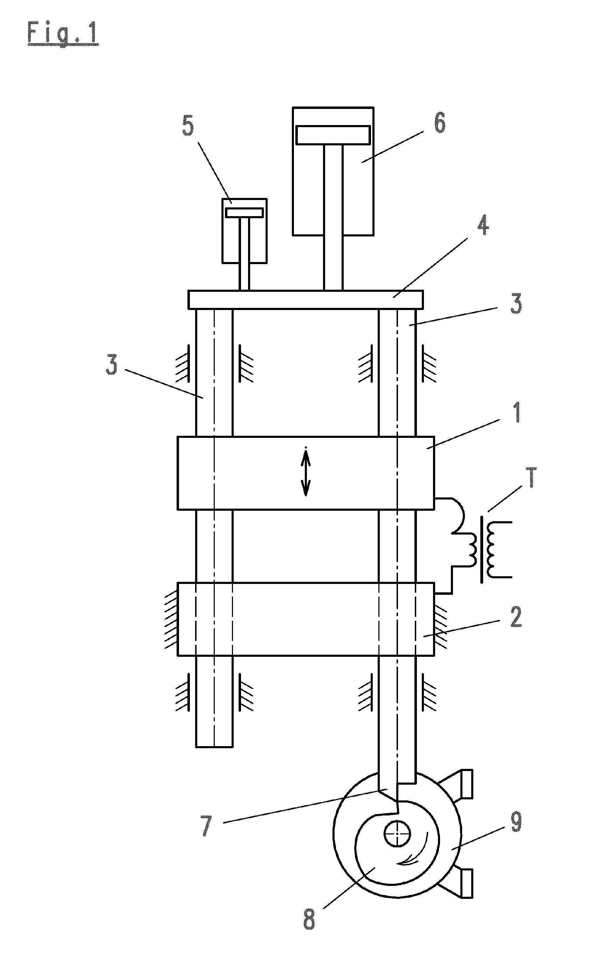

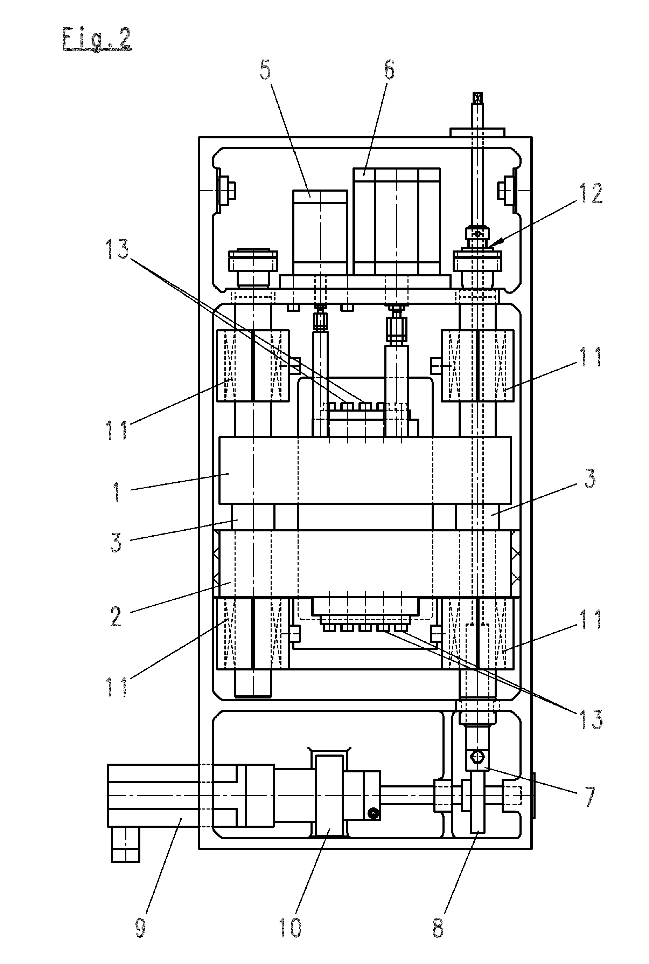

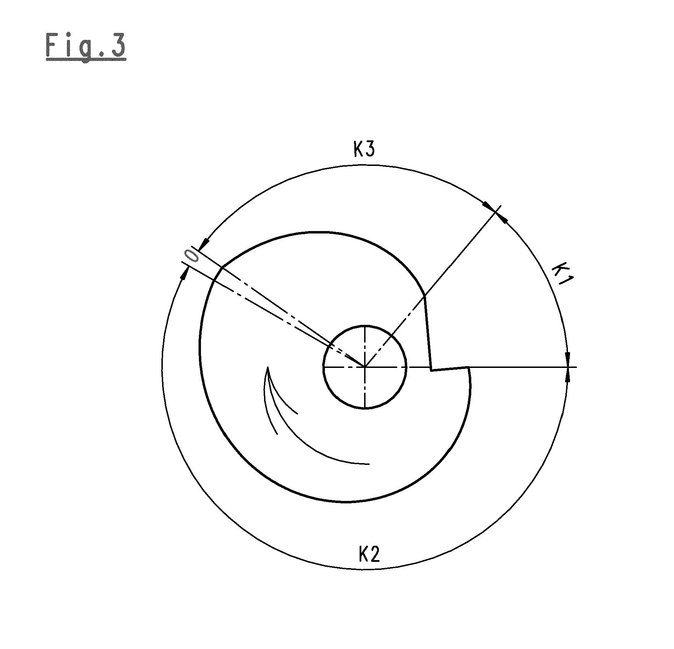

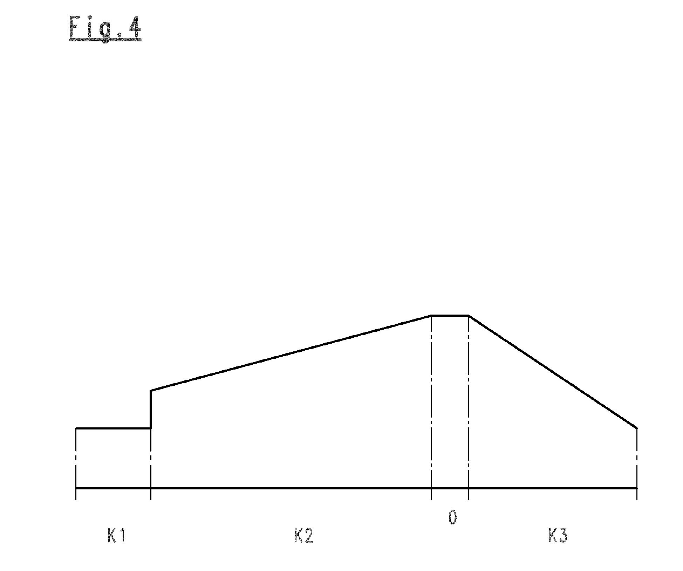

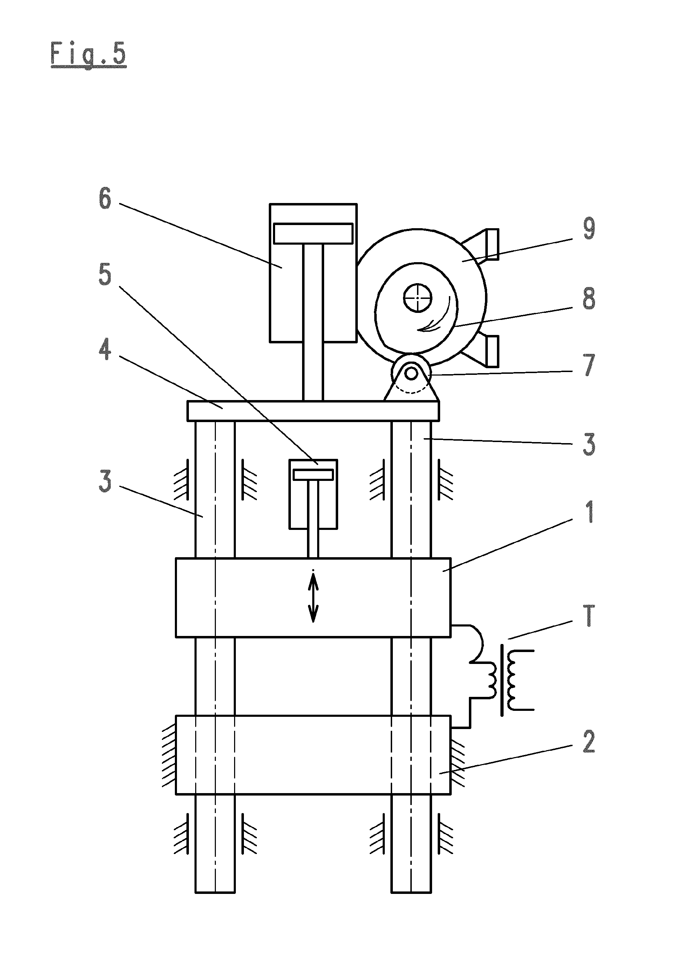

## Patentansprüche

1. Abrennstumpfschweißmaschine
- mit einem Antrieb (9, 10), der einen Servomotor (9) umfasst,
- mit einem Kurvengetriebe (7, 8), das mit einem Antrieb gekoppelt ist,
- mit einem ersten Haltemittel (1) zum Halten eines ersten Fügepartners, das mit einem Abtaster (7) des Kurvengetriebes (7, 8) verbunden ist, und
- mit einem zweiten Haltemittel (2) zum Halten eines zweiten Fügepartners,
**dadurch gekennzeichnet, dass**
das Kurvengetriebe (7, 8) einen Kurvenkörper, insbesondere eine Kurvenscheibe (8), aufweist und dass die Kurve des Kurvenkörpers (8) einen Absatz oder einen ersten Abschnitt mit einer unendlichen oder nahezu unendlichen Steigung aufweist.

2. Maschine nach Anspruch 1, **dadurch gekennzeichnet, dass** die Maschine ein Steuer- und/oder Regelmittel aufweist, mit welchem eine Drehung des Servomotors (9) und des damit gekoppelten Kurvenkörpers (8) steuerbar und/oder regelbar ist, wobei das Steuer- und/oder Regelmittel programmierbar ist und/oder zwischen Programmen des Steuer- und/oder Regelmittels auswählbar ist, wobei das wenigstens eine Programm eine Sollbewegung des Kurvenkörpers (8) mit vorgibt.

3. Maschine nach Anspruch 1 oder 2, **dadurch gekennzeichnet, dass** die Kurve wenigsten einen zweiten Abschnitt mit einer gleichbleibenden positiven Steigung aufweist.

4. Maschine nach Anspruch 3, **dadurch gekennzeichnet, dass** die Kurve des Kurvenköpers, in einem dritten Abschnitt eine gleichbleibende negative Steigung aufweist.

5. Maschine nach Anspruch 4, **dadurch gekennzeichnet, dass** der erste Abschnitt, der zweite Abschnitt und der dritte Abschnitt oder der Absatz mittelbar oder unmittelbar hintereinander liegen.

6. Maschine nach einem der Ansprüche 2 bis 5, **dadurch gekennzeichnet, dass** wenigstens ein Programm eine Sollbewegung des Kurvenkörpers mit vorgibt, bei der der Kurvenkörper während eines Programmablaufs beschleunigt und/oder abgebremst wird.

7. Maschine nach einem der Ansprüche 1 bis 6, **dadurch gekennzeichnet, dass** die Maschine eine Feder und/oder einen Linearantrieb (5, 6) aufweist, die bzw. der mit dem ersten Haltemittel (1) gekoppelt ist.

8. Maschine nach Anspruch 7, **dadurch gekennzeichnet, dass** die Feder eine gewundene Torsionsfeder ist.

9. Maschine nach Anspruch 7 oder 8, **dadurch gekennzeichnet, dass** der Linearantrieb ein Pneumatikantrieb (5, 6) oder ein Hydraulikantrieb ist.
